Europäisches Patentamt

European Patent Office

Office européen des brevets

(19)

(11) Veröffentlichungsnummer : **0 046 535**
**B1**

(12) **EUROPÄISCHE PATENTSCHRIFT**

(45) Veröffentlichungstag der Patentschrift :
**11.04.84**

(51) Int. Cl.³ : **C 08 F 2/00**

(21) Anmeldenummer : **81106228.0**

(22) Anmeldetag : **10.08.81**

(54) **Verfahren zur Herstellung von Perlpolymerisaten einheitlicher Teilchengrösse.**

(30) Priorität : **22.08.80 DE 3031737**

(43) Veröffentlichungstag der Anmeldung :
**03.03.82 Patentblatt 82/09**

(45) Bekanntmachung des Hinweises auf die Patenterteilung : **11.04.84 Patentblatt 84/15**

(84) Benannte Vertragsstaaten :
**DE FR GB IT NL**

(56) Entgegenhaltungen :
**US-A- 2 326 326**
**US-A- 3 784 491**
**US-A- 3 922 255**

(73) Patentinhaber : **BAYER AG**
**Konzernverwaltung RP Patentabteilung**
**D-5090 Leverkusen 1 Bayerwerk (DE)**

(72) Erfinder : **Lange, Peter Michael, Dr.**
**Walter-Flex-Strasse 9**
**D-5090 Leverkusen (DE)**
Erfinder : **Strüver, Werner, Dr.**
**An der Ruthen 5**
**D-5000 Köln 80 (DE)**

EP 0 046 535 B1

# Verfahren zur Herstellung von Perlpolymerisaten einheitlicher Teilchengröße

Die Ansprüche, die moderne Ionenaustauschertechnologien an die Eigenschaften der einzelnen Austauschertypen stellen, steigen in zunehmendem Maße. Neben immer höheren Anforderungen an Kapazität, Kinetik und Beständigkeit gegenüber mechanischen und osmotischen Belastungen wird zunehmend eine immer größere Einheitlichkeit der Korngröße verlangt. Besonders hohe Ansprüche an die Einheitlichkeit der Korngröße werden gestellt, wenn die Hydrodynamik ein entscheidender Parameter des angewendeten Verfahrens ist.

Beispielsweise erfordern Hochleistungs-Ionenaustauschfilter für größe Durchsätze ein grobes Korn möglichst einheitlicher Größe, weil sich das Feinkorn in das Zwischenkornvolumen der großen Perlen setzt und auf diese Weise den Filterwiderstand erhöht. Infolge des erhöhten Widerstandes müssen bei den geforderten großen Durchsätzen erhöhte Drucke angewendet werden, die ihrerseits leicht zum Bruch der Austauscher-Perlen führen.

Ebenso wichtig ist eine weitgehend einheitliche Korngröße für Austauscher, die in Mischbettfiltern eingesetzt werden. Eine stark unterschiedliche Korngröße führt zu einer starken Durchmischung der Feinanteile des spezifisch schwereren Ionenaustauschers mit dem Grobkorn des spezifisch leichteren. Auch beim Trennschichtverfahren für Mischbettfilter wird für die drei Komponenten Anionenaustauscher, Trennschichtmaterial und Kationenaustauscher jeweils eine einheitliche Korngröße gewünscht. Für das störungsfreie Funktionieren des in der DE-P-14 42 689 beschriebenen Gegenstrom-Verfahrens ist ein Harz einheitlicher Korngröße ebenfalls von Vorteil.

Es sind deshalb bereits verschiedene Versuche zur Herstellung von Ionenaustauschern bzw. ihnen zugrundeliegender Matrizes möglichst einheitlicher Teilchengröße unternommen worden. Bei den bekannten Verfahren zur Herstellung von Ionenaustauschern bzw. deren Matrizes geht man entweder von Perlpolymerisaten oder Perlkondensaten aus, die durch Suspensions-Polymerisation bzw. -kondensation der Ausgangsverbindungen erhalten werden, oder man vermahlt in Masse gewonnene vernetzte Polymerisate oder Polykondensate. Bei beiden Techniken fallen die Teilchen in einer Korngrößenverteilung an, die sich häufig durch eine Gauss-Kurve darstellen läßt. Um sich der gewünschten Einheitlichkeit der Korngröße zu nähern, sind physikalische Trennverfahren wie Sieben oder fraktioniertes Flotieren erforderlich. Derartige Trennverfahren sind erstens aufwendig und haben zweitens den schwerwiegenden Nachteil, daß das bei ihnen zwangsläufig anfallende Über- und Unterkorn vielfach nicht mehr, zumindest aber nur schwierig verwertbar ist. Die Menge an unerwünschtem Unter- bzw. Überkorn nimmt bei diesen Verfahren mit wachsenden Ansprüchen an die Einheitlichkeit der Korngröße zu.

Bei Perlpolymerisaten läßt sich die mittlere Korngröße in gewissem, die Breite des Korngrößenspektrums dagegen nur in sehr begrenztem Umfang durch die Polymerisations-Bedingungen beeinflussen. Zum Beispiel werden in der US-A-4 129 707 Suspensionspolymerisationen beschrieben, mit deren Hilfe eine gewisse Einengung der Korngrößenverteilung erreicht wird. Es werden jedoch lediglich die Mengen an Unter- und Überkorn herabgesetzt, Teilchen einheitlicher Korngrößen sind mit ihnen nicht erhältlich.

Auch das in der US-A-3 784 491 beschriebene Verfahren zur Herstellung von Polymerteilchen einheitlicher Größe liefert keine Perlpolymerisate einheitlicher Korngröße. Gemäß diesem Verfahren werden die aus dem zu polymerisierenden Gemisch erzeugten Flüssigkeitströpfchen durch Umhüllen mit löslichen, Gelatinehaltigen. Komplexkoazervaten vor dem Agglomerieren geschützt. Da die Flüssigkeitströpfchen jedoch bereits vor dem Umhüllen Scherkräften unterworfen werden, die ein Zusammenlaufen und Zerteilen der Tröpfchen verursachen, werden verfahrensgemäß Teilchen unterschiedlichster Teilchengröße umhüllt. Das Umhüllen führt deshalb nicht zu den gewünschten Polymerteilchen einheitlicher Korngröße. Hinzu kommt, daß die zum Umhüllen der Flüssigkeitströpfchen vorgeschlagenen löslichen Gelatine-haltigen Komplexkoazervate flüssig sind und deshalb die Tröpfchen auch nach dem Umhüllen bei der Einwirkung von Scherkräften nicht vor dem Zerteiltwerden schützen. Außerdem lösen sich die flüssigen Hüllen unter den bevorzugt angewendeten alkalischen Polymerisationsbedingungen auf.

Ein günstigeres Verfahren zur Herstellung von Perlpolymerisaten einheitlicher Teilchengröße ist in der US-A-39 22 255 beschrieben. Gemäß diesem Verfahren werden die durch einen Düsenboden erzeugten gleich großen Monomertröpfchen in eine Reaktionssäule überführt, in der sie so lange verweilen, bis die Polymerisation soweit fortgeschritten ist, daß sie, ohne Schaden zu nehmen, der Säule entnommen werden können. Die Verweildauer wird dabei durch einen dem Auftrieb der Tröpfchen entgegengesetzten Strom einer kontinuierlichen Phase eingestellt. Abgesehen von dem hohen technischen Aufwand ist der große Nachteil dieses Verfahrens, daß der die Verweildauer regelnde Flüssigkeitsstrom eine derart hohe lineare Geschwindigkeit aufweisen muß, so daß sich ein Geschwindigkeitsprofil über den Säulenquerschnitt ausbildet, das zu einer ungleichmäßigen Verweilzeit für die einzelnen Monomer-Tropfen in der Polymerisationssäule führt. Die unterschiedlichen Verweilzeiten der Monomer-Tröpfchen führt zu Qualitätsunterschieden der aus den Polymerisaten gewonnenen Austauscherperlen. Der durch die extremen hydrodynamischen Verhältnisse der Polymerisationskolonne bewirkte Qualitätsunterschied zwischen den Polymerisat-Perlen schränkt die Brauchbarkeit des Verfahrens stark ein.

Auch den Verfahren zur Verkapselung von Flüssigkeiten, z. B. den in den US-A-3 429 827 und 3 577 515 beschriebenen Verfahren, ließ sich keine Anregung zur Lösung des technischen Problems — Herstellung von Perlpolymerisaten einheitlicher Teilchengröße und Qualität — entnehmen, da nach diesen Verfahren weder Kapseln einheitlicher Teilchengröße noch einheitlicher physikalischer Eigenschaften erhalten werden.

So liefert das in der US-A-3 429 827 beschriebene Verfahren zur Verkapselung von Flüssigkeiten keine Kapseln gleicher Größe, weil infolge der angewendeten Verkapselungsbedingungen die Bildung gleichmäßig rund geformter Tröpfchen durch eine zu früh einsetzende Bildung der Kapselwand wenn nicht verhindert, so doch zumindest stark behindert wird (s. die entsprechenden Angaben in der US-A-3 577 515, Spalte 2, Zeile 65 — Spalte 3, Zeile 5). Die in der US-A-3 577 515 vorgeschlagenen Maßnahmen zur Vermeidung der dem in der US-A-3 429 827 vorgeschlagenen Verfahren anhaftenden Nachteile führen jedoch auch nicht zu Kapseln einheitlicher Größe, weil die Tröpfchen, bevor sich eine stabile Kapselwand ausbilden kann, infolge der auf sie einwirkenden Scherkräfte durch Ineinanderfließen und Zerteilen unterschiedlichste Größen aufweisen und infolgedessen in Kapseln unterschiedlicher Größe übergehen.

Es wurde nun gefunden, daß man Perlpolymerisate einheitlicher Teilchengröße und einheitlicher Qualität erhält, wenn man aus dem zu polymerisierenden Monomer bzw. Polymerisationsgemisch durch Eindüsen des Monomers bzw. Polymerisationsgemisches in eine mit dem Monomer bzw. Polymerisationsgemisch im wesentlichen nicht mischbare Flüssigkeit (kontinuierliche Phase) Monomer-Tröpfchen bzw. Polymerisationsgemisch-Tröpfchen einheitlicher Teilchengröße erzeugt, diese Tröpfchen einheitlicher Größe nach an sich bekannten Verfahren der Mikroverkapselung mit einer unter den anzuwendenden Polymerisationsbedingungen stabilen Hülle verkapselt, die verkapselten Tröpfchen anschließend polymerisiert und bei den Verfahrensschritten der Tröpfchen-Erzeugung und des Verkapselns der Tröpfchen bestimmte Bedingungen einhält.

Die Erfindung betrifft daher ein Verfahren zur Herstellung von Perlpolymerisaten einheitlicher Teilchengröße und einheitlicher Qualität, das dadurch gekennzeichnet ist, daß man

a) aus dem zu polymerisierenden Monomer bzw. Polymerisationsgemisch durch Eindüsen in eine mit dem Monomer bzw. Polymerisationsgemisch im wesentlichen nicht mischbare, kontinuierlich zugeführte Flüssigkeit Tröpfchen einheitlicher Größe erzeugt ;

b) diese Tröpfchen einheitlicher Größe in besagter Flüssigkeit kontinuierlich nach an sich bekannten Verfahren der Mikroverkapselung entweder unmittelbar mit einer unter den anzuwendenden Polymerisationsbedingungen stabilen Hülle oder zunächst mit einer gegenüber Scherkräften stabilen Hülle verkapselt und diese gegenüber Scherkräften stabile Hülle in einem zweiten Teilschritt kontinuierlich oder diskontinuierlich zu einer unter den anzuwendenden Polymerisationsbedingungen stabilen Hülle härtet ;

c) die mit einer unter den anzuwendenden Polymerisationsbedingungen stabilen Hülle verkapselten Monomer- bzw. Polymerisationsgemisch-Tröpfchen anschließend polymerisiert, mit der Maßgabe,

α) daß man das Monomer bzw. das Polymerisationsgemisch im Gleichstrom zur kontinuierlich zugeführten kontinuierlichen Phase in diese eindüst ;

β) daß man die Erzeugung der Tröpfchen und deren Verkapselung in verschiedenen Bereichen des Reaktionsgefäßes vornimmt ;

γ) daß man die Verfahrensschritte a) und b) in der Weise ausführt, daß auf die Tröpfchen von ihrer Erzeugung bis zu ihrer Verkapselung keine die Integrität der Tröpfchen verändernden Kräfte einwirken.

Die Verkapselung mit einer unter den anzuwendenden Polymerisationsbedingungen stabilen Hülle wird dann in zwei Teilschritten ausgeführt, wenn die nach den Verfahren der Mikroverkapselung um die Tröpfchen erzeugten Hüllen zwar gegen Scherkräfte, nicht aber unter den anzuwendenden Polymerisationsbedingungen stabil sind.

In diesem Fall müssen die Hüllen in einem zweiten Verfahrensschritt, der kontinuierlich oder diskontinuierlich ausgeführt werden kann, zu unter den Polymerisationsbedingungen stabilen Hüllen gehärtet werden. Der Härtungsschritt kann in einem gesonderten Arbeitsgang in einem getrennten Reaktionsgefäß durchgeführt werden ; vorzugsweise wird er jedoch im gleichen Reaktionsgefäß vorgenommen.

Sind die nach dem Verfahren der Mikroverkapselung um die Tröpfchen erzeugten Hüllen dagegen bereits unter den anzuwendenden Polymerisationsbedingungen stabil, so entfällt der Härtungsschritt, und die Verkapselung mit den unter den anzuwendenden Polymerisationsbedingungen stabilen Hüllen wird in einem Schritt ausgeführt.

Als gegenüber Scherkräften stabil werden im Rahmen des erfindungsgemäßen Verfahrens Hüllen dann bezeichnet, wenn sie, ohne daß sie beschädigt werden, Rührbewegungen einer Intensität aushalten, wie sie unter den Bedingungen gebräuchlicher Suspensionspolymerisationen angewendet werden, um Tröpfchen gleicher Größe herzustellen.

Durch die erfindungsgemäße Kombination von Erzeugung von Monomer- bzw. Polymerisationsgemisch-Tröpfchen einheitlicher Größe, Stabilisierung dieser Tröpfchen durch Verkapselung und Polymerisation der mit einer unter den Polymerisationsbedingungen stabilen Hülle verkapselten Tröpfchen und dies unter Einhaltung bestimmter Bedingungen werden Perlpolymerisate erhalten, deren Perlen sich durch annähernd gleiche Teilchengröße und durch Einheitlichkeit in ihren physikalischen Eigenschaften wie Kornstabilität, Bruchfestigkeit usw. auszeichnen.

Das erfindungsgemäße Verfahren eignet sich zur Herstellung von Perlpolymerisaten einheitlicher Teilchengröße aus den verschiedensten Monomeren. Voraussetzung für die Anwendbarkeit des Verfahrens ist lediglich, daß das Polymerisationsgemisch unter den Verdüsungsbedingungen flüssig ist. Unter der Bezeichnung Polymerisationsgemisch sind im Rahmen der vorliegenden Erfindung zu polymerisierende, mit üblichen Polymerisations-Zusätzen versetzte Monomere bzw. Monomerengemische zu verstehen.

Als übliche Polymerisationszusätze seien vor allem Polymerisations-Initiatoren (Radikalbildner wie Azoisobutyronitril und Dibenzoylperoxid) und Polymerisationsinhibitoren, ferner Inertflüssigtkeiten und Polymere, die bei der Polymerisation eine Strukturveränderung, z. B. Makroporosität, des Polymers bewirken, genannt.

Die Polymerisationsgemische können ferner Farbstoffe und, falls die Perlpolymerisate Extraktionsmittel für die Flüssig-Flüssig-Extraktion einpolymerisiert enthalten sollen, auch Extraktionsmittel für die Flüssig-Flüssig-Extraktion enthalten.

Die Polymerisationsgemische können auch Verbindungen enthalten, die mit anderen Verbindungen unter Bildung der Kapselwand reagieren.

Das erfindungsgemäße Verfahren eignet sich zur Herstellung sowohl gelförmiger als auch makroporöser Perlpolymerisate.

Als in dem erfindungsgemäßen Verfahren verwendbare Monomere seien beispielsweise genannt : Einfach ungesättigte Verbindungen wie Monovinylverbindungen, z. B. Styrol, Vinyltoluol, Ethylstyrol, α-Methylstyrol und deren im Kern halogenierte Derivate wie Chlorstyrol ; ferner Vinylbenzylchlorid, Acrylsäure, ihre Salze und ihre Ester, besonders der Methyl- und Ethylester, Methacrylsäure, ihre Salze und ihre Ester, besonders der Methylester, ferner die Nitrile und Amide von Acryl- und Methacrylsäure.

Als mehrfach ungesättigte Verbindungen seien insbesondere genannt : Polyvinylverbindungen wie Divinylbenzol, Divinyltoluol, Trivinylbenzol, Divinylnaphthalin, Trivinylnaphthalin, Diethylenglykoldivinylether, Trivinylcyclohexan, Octadien-1,7, Heptadien-1,6, Hexadien-1,5, Methacrylsäureester mehrwertiger Alkohole, beispielsweise Ethylenglykoldimethacrylat, und Methylen-N-N'-bisacrylamid.

Besonders bewährt haben sich in dem erfindungsgemäßen Verfahren als Monomere : als Monovinylverbindungen Styrol, α-Methylstyrol, Ethylstyrol, Chlorstyrol, Ester und/oder Amide der (Meth)-Acrylsäure, Acrylnitril, als Divinylverbindungen Divinylbenzol, Divinyltoluol, Trivinylbenzol, Diethylenglykoldivinylether, Trivinylcyclohexan, Octadien-1,7, Heptadien-1,6, Hexadien-1,5 und/oder Methacrylsäureester mehrwertiger Alkohole.

Die Erzeugung gleich großer Tröpfchen durch Verdüsen ist bekannt (siehe z. B. Naefe et al. in Chem. Ing. Techn. *50*, 4 (1978) S. 321 ; ferner US-A-3 922 255). Die für den Zerfall in gleich große Tröpfchen erforderlichen Ausflußgeschwindigkeiten können mit Hilfe der bei Naefe et al., loc. cit. angegebenen Formel berechnet werden.

Das Eindüsen des Monomers bzw. Polymerisationsgemisches in die mit dem Monomer bzw. Polymerisationsgemisch im wesentlichen nicht mischbare, kontinuierlich zugeführte Flüssigkeit (kontinuierliche Phase) zur Erzeugung der Monomertröpfchen einheitlicher Teilchengröße erfolgt im einfachsten Fall mittels einer Kapillare, durch die das flüssige Monomer bzw. Polymerisationsgemisch in die kontinuierliche Phase einströmt. Beim Austritt des Monomerstroms in die kontinuierliche Phase tritt eine Zerlegung des Monomer-Strahles in Tröpfchen gleicher Größe ein. In technischen Anlagen können an die Stelle einer einzelnen Kapillare perforierte Scheiben mit Kapillarbohrungen oder ähnliche Vorrichtungen treten. Die Teilchengröße wird durch den inneren Durchmesser der Kapillare bzw. Kapillarbohrungen bestimmt.

Als Verdüsungsbereich wird in dem erfindungsgemäßen Verfahren der Bereich des Reaktionsgefäßes bezeichnet, in dem der Monomerstrahl in die kontinuierliche Phase eintritt und die beim Strahlzerfall in der kontinuierlicher Phase gebildeten Monomertröpfchen ihre endgültige Kugelgestalt annehmen.

An diesen Bereich schließt sich der Verkapselungsbereich, d. h. der Bereich des Reaktionsgefäßes an, in dem die fertig ausgebildeten Monomertröpfchen mit einer unter den anzuwendenden Polymerisationsbedingungen bzw. einer gegenüber Scherkräften stabilen Hülle versehen werden.

Erfindungswesentlich ist, daß Verdüsungsbereich und Verkapselungsbereich zwei verschiedene, d. h. von den Monomer-Tröpfchen nacheinander durchlaufene Bereiche sind und daß nicht, wie bei den bekannten Verfahren, z. B. dem in der US-A-34 29 827 beschriebenen Verfahren, im selben Bereich des Reaktionsgefäßes verdüst und verkapselt wird. Durch die erfindungsgemäße Trennung von Verdüsungs- und Verkapselungsbereich wird verhindert, daß Teile des Monomerstrahles schon vor ihrem vollständigen Zerfall in Tröpfchen verkapselt und auf diese Weise Teilchen unterschiedlicher Form und Größe umhüllt und später polymerisiert werden. Verdüsungsbereich und Verkapselungsbereich können durch die freie Bewegung der Monomer-Tröpfchen in der strömenden kontinuierlichen Phase nicht behindernde mechanische Vorrichtungen, z. B. Verjüngungen des Reaktionsrohres, trichterförmige Einbauten im Reaktionsgefäß, voneinander abgegrenzt sein. Sie können aber auch unmittelbar ineinander übergehen.

Erfindungswesentlich ist ferner, daß von der Erzeugung bis zur beendeten Verkapselung der Monomer-Tröpfchen keine Kräfte auf die Tröpfchen einwirken, die eine Änderung der Integrität der einzelnen Tröpfchen verursachen. Als solche erfindungsgemäß zu vermeidenden Kräfte seien vor allem Scherkräfte genannt, wie sie an Monomer-Tröpfchen angreifen, wenn Systeme aus in einer kontinuierlichen Phase verteilten Monomer-Tröpfchen gerührt werden.

Das Angreifen von Scherkräften an den beim Strahlzerfall erzeugten gleich großen Monomer-Tröpfchen wird erfindungsgemäß dadurch vermieden, daß diese Tröpfchen hydrodynamisch aus dem Verdüsungsbereich und anschließend durch den Verkapselungsbereich transportiert werden.

Erfindungsgemäß werden die durch den Dichte-Unterschied zwischen Monomer-Tröpfchen und kontinuierlicher Phase verursachte Bewegung, d. h. der Auftrieb bzw. das Sinken der Tröpfchen in der kontinuierlichen Phase und die Fließbewegung der kontinuierlichen Phase zum hydrodynamischen Transport der Tröpfchen durch das Reaktionsgefäß, d. h. aus dem Verdüsungsbereich und durch den Verkapselungsbereich ausgenutzt. Die Ausnutzung dieser Effekte wird dadurch ermöglicht, daß Tröpfchen und kontinuierliche Phase im Gleichstrom durch das Reaktionsgefäß geleitet werden.

Als kontinuierliche, mit dem Monomer bzw. Polymerisationsgemisch im wesentlichen nicht mischbare, kontinuierlich zugeführte Flüssigkeit haben sich für lipophile Monomere wie Styrole, (Meth)-Acrylsäureester, (Meth)-Acrylnitril, Divinylbenzol, bzw. lipophile Polymerisationsgemische Wasser bzw. verdünnte wäßrige Lösungen der Stoffe die für die Verkapselung förderlich sind, z. B. verdünnte Lösungen von Basen, wie Soda und/oder von geeigneten Suspensionsstabilisatoren wie vorzugsweise Gelatine bewährt, für polare wasserlösliche Monomere, wie (Meth)-Acrylsäure bzw. Polymerisationsgemische sind hydrophobe Medien, z. B. aliphatische und aromatische (Halogen-)-Kohlenwasserstoffe oder Silikonöle, geeignet.

Das Verhältnis der Volumina $V_{kont} : V_{mono}$ ($V_{kont}$ = Volumen der kontinuierlichen Phase ; $V_{mono}$ = Volumen des Monomer bzw. Polymerisationsgemisches) sollte den Wert 0,1 nicht unterschreiten. Das Volumenverhältnis beträgt je nach angewendetem Verkapselungs-Verfahren 0,1 bis 60. Bei der Verkapselung nach dem Koazervationsverfahren beträgt es vorzugsweise etwa 3 bis 60 und bei der Verkapselung nach dem Komplexkoazervations- und dem Phasengrenzflächenreaktions-Verfahren etwa 1 bis 20.

Die obere Grenze der Volumenverhältnisse wird dabei durch die Wirtschaftlichkeit des Verfahrens bestimmt, denn die Raum-Zeit-Ausbeute an gekapselten Monomertröpfchen sinkt mit steigendem Verhältnis. Da sich die Verkapselung von Monomertröpfchen gleicher Größe als solche nicht von der bekannten kontinuierlichen und diskontinuierlichen Verkapselung unterscheidet, können grundsätzlich die Volumenverhältnisse und auch die Konzentrationen der verschiedenen Komponenten, wie sie für die bekannten Verkapselungs-Verfahren z. B. in den Übersichtsarbeiten von Kondo Surf. Colloid Sci., 10, 1978, S. 1-43 und Kirk-Othmer, Encyclopedia of Chemical Technology, Sec. Ed. Vol. 13, S. 436-456 beschrieben bzw. zitiert sind, angewendet werden.

Das Eindüsen des Monomeren bzw. Polymerisationsgemisches wird normalerweise bei Temperaturen von 0 bis 95 °C, vorzugsweise bei 5 bis 70 °C, vorgenommen.

Beim Eindüsen des Monomers bzw. Polymerisationsgemisches in die kontinuierliche Phase strömt die kontinuierliche Phase im Gleichstrom zum Polymerisationsgemisch-Strahl. Ganz besonders bewährt hat sich für das Eindüsen die Verwendung von konzentrischen Zweistoffdüsen. In diesen strömt das Polymerisationsgemisch durch die innere, die kontinuierliche Phase durch die äußere der beiden konzentrisch angeordneten Düsen.

Um beim Strahlzerfall Störungen auszuschließen, die die Einheitlichkeit der Tröpfchengröße beeinträchtigen, kann es vorteilhaft sein, den Polymerisationsgemisch-Strahl in Longitudinal-Schwingungen geeigneter Frequenz zu versetzen. Dies kann z. B. durch Einwirkung periodischer Druckschwankungen, wie Schallwellen oder periodisches Bewegen der Düse geschehen.

Vorteilhaft enthält die kontinuierliche Phase gelöste Stoffe (Tröpfchen-Stabilisatoren), die ein Ineinanderfließen der Polymerisationsgemisch-Tröpfchen vor dem Verkapselungsschritt verhindern. Als Tröpfchen-Stabilisatoren eignen sich z. B. die aus der Perlpolymerisations-Technik bekannten Suspensionshilfsmittel, z. B. Polyvinylalkohol oder Methylcellulose. Als besonders vorteilhaft hat sich die Verwendung solcher Tröpfchen-Stabilisatoren erwiesen, die gleichzeitig zum Aufbau der Kapselwand dienen können. Als solche Stabilisatoren seien beispielsweise genannt : Gelatine und Agar-Agar.

Die Konzentration der Stabilisatoren in der kontinuierlichen Phase beträgt üblicherweise 0,01 bis 10 Gew.-% bezogen auf das Gewicht der kontinuierlichen Phase.

An die Erzeugung der Polymerisationsgemisch-Tröpfchen einheitlicher Größe schließt sich die Verkapselung an. Zur Verkapselung bewegt man die Tröpfchen aus dem Bereich, in dem sie erzeugt wurden (Verdüsungsbereich), in den angrenzenden Verkapselungsbereich. Die Temperatur des Verkapselungsbereiches ist unabhängig von der Temperatur des Verdüsungsbereichs einstellbar. Außerdem ist der Verkapselungsbereich mit Vorrichtungen ausgerüstet, die die Einspeisung weiterer flüssiger Komponenten gestatten.

Die Verkapselung der stabilisierten Polymerisationsgemisch-Tröpfchen einheitlicher Teilchengröße wird kontinuierliche nach an sich bekannten Verfahren der Mikroverkapselung vorgenommen. Solche bekannten Verfahren sind z. B. :

a) Die Koazervation

Bei der Koazervation bildet sich eine kolloidreiche Phase aus, die sich um das Polymerisationsgemisch-Tröpfchen legt. Für die Verkapselung mittels Koazervation eignen sich hydrophile Kolloide wie Gelatine oder Agar-Agar. Um die Koazervation auszulösen, wird beispielsweise eine wäßrige Salzlösung dem Verkapselungsbereich zugeführt. Als Salze haben sich bei der Verwendung von Gelatine als hydrophilem Kolloid Alkalisulfate, besonders Natriumsulfat bewährt. Die Verkapselung mittels Koazervation läßt sich besonders einfach in der Weise ausführen, daß man als kontinuierliche Phase, in dem der Zerfall des Polymerisationsgemisch-Strahls erfolgt, die wäßrige Lösung eines hydrophilen Kolloids wie Gelatine oder Agar-Agar wählt. Der Strahlzerfall wird bei Temperaturen oberhalb der Gelierungstemperatur des Kolloids vorgenommen.

An die Ausbildung der Koazervathülle schließt sich deren Verfestigung durch Abkühlen unter die Gelierungstemperatur an. Die so erzeugte Koazervat-Hülle ist zwar gegenüber Scherkräften, häufig aber nicht unter den anzuwendenden Polymerisationsbedingungen stabil. Um zu unter den anzuwendenden Polymerisationsbedingungen stabilen Hüllen zu gelangen, werden die verkapselten Teilchen einer chemischen Härtung unterworfen. Verfahren zur chemischen Härtung, z. B. die Härtung von Gelatine mit Aldehyden wie Formaldehyd, sind bekannt (s. z. B. US-A-2 800 458). Die chemische Härtung der Teilchen kann kontinuierlich oder diskontinuierlich im gleichen oder einem anderen Reaktionsgefäß vorgenommen werden.

b) Die Komplexkoazervation

Bei der Komplexkoazervation bildet sich eine kolloidreiche Phase aus zwei verschieden geladenen Kolloiden (Polyelektrolyten) aus, die sich um das Monomertröpfchen legt. Für die Verkapselung durch Komplexkoazervation eignen sich z. B. Systeme aus Gelatine und Gummiarabicum oder aus Gelatine und speziellen Copolymerisat-Gemischen aus einem Copolymerisat mit statistisch verteilten Resten von Acrylamid und Maleinsäure oder Maleinsäureanhydrid und einem Copolymerisat mit statistisch verteilten Resten von Acrylamid, Acrylsäure und Maleinsäure. Solche Copolymerisat-Gemisch sind z. B. in der US-A-4 181 639 als Komplex-Koazervierungskomponenten beschrieben. Um die Komplexkoazervation auszulösen, wird beispielsweise der pH-Wert des Verkapselungsbereichs durch Zugabe von Säuren, z. B. beim System Gelatine/Gummi arabicum, so eingestellt, daß nur einer der ursprünglich gleichsinnig geladenen Polyelektrolyte sein Ladungsvorzeichen ändert. Anschließend an die Ausbildung der Komplexkoazervathülle um das Polymerisationsgemisch-Tröpfchen bewegt sich das Tröpfchen in einen Abschnitt des Verkapselungsbereichs, der auf eine Temperatur unterhalb der Gelierungstemperatur eingestellt ist.

Die so erzeugte Komplex-Koazervat-Hülle ist zwar gegenüber Scherkräften, häufig aber nicht unter den anzuwendenden Polymerisationsbedingungen stabil. Um zu unter den anzuwendenden Polymerisationsbedingungen stabilen Hüllen zu gelangen, werden die verkapselten Teilchen meistens noch einer chemischen Härtung unterworfen. Solche Verfahren zur chemischen Härtung, z. B. zur Härtung von Gelatine enthaltenden Kapselwänden mit Aldehyden wie Formaldehyd sind bekannt (s. US-A-2 800 457).

c) Die Phasengrenzflächenreaktion

Bei der Verkapselung durch Phasengrenzflächenreaktion wird die das Polymerisationsgemisch-Tröpfchen umhüllende Kapselwand dadurch gebildet, daß eine im Polymerisationsgemisch enthaltene Komponente 1 mit einer der kontinuierlichen Phase im Verkapselungsbereich zugesetzten Komponente 2 an der Phasengrenzfläche Tröpfchen/kontinuierliche Phase unter Filmbildung reagiert. Praktisch wird diese Verkapselung durch Phasengrenzflächenreaktion so ausgeführt, daß man dem Polymerisationsgemisch eine Komponente 1 zugibt, die mit diesem mischbar, mit der kontinuierlichen Phase aber weitgehend unmischbar ist. Nach Zerteilen des Polymerisationsgemisches in gleich große Tröpfchen, wobei die Tröpfchen durch ein beliebiges Suspensionshilfsmittel stabilisiert werden, bewegt sich der Tröpfchenschwarm in den Verkapselungsteil. Hier wird eine Komponente 2 zugespeist. Diese Komponente 2 ist in der kontinuierlichen Phase löslich. Komponentenpaare $K_1/K_2$, die an der Phasengrenzfläche unter Filmbildung reagieren, sind in großer Zahl bekannt. Beispielsweise seien die Halogenide mehrbasischer Säuren wie Sebacoylchlorid, Terephthaloylchlorid, Phosgen, mehrwertige Isocyanate, wie Toluol-2,4-diisocyanat, Hexamethylendiisocyanat, Chloride von mehrbasischen Sulfonsäuren, wie 1,3-Benzoldisulfonylchlorid, einerseits und mehrwertige Amine, wie Hexamethylendiamin, und mehrwertige Hydroxyverbindungen wie Pyrogallol, Bisphenol A andererseits angeführt, die zu polymeren Carbonsäureamiden und -estern, zu Polyharnstoffen und Polyurethanen, zu polymeren Sulfonamiden und Sulfonsäureestern reagieren (siehe z. B. P.G. Morgan, « Interfacial Polycondensation, A. Versatile Method of Polymer Preparation », Soc. Plastics Engineers Journal » 15, 485-495). Die unterschiedliche Reaktivität der verschiedenen Komponentenpaare $K_1/K_2$ wird durch Einstellen der Verweildauer im Verkapselungsbereicht und durch Einstellen bestimmter Temperaturen berücksichtigt. In manchen Fällen hat es sich als vorteilhaft erwiesen, die Phasengrenzflächenreaktion fördernde Substanzen, z. B. Basen bei Polykondensationsreaktionen, bei denen Säuren entstehen, mitzuverwenden. Diese Hilfsstoffe werden vorzugsweise der kontinuierlichen Phase des Verkapselungsbereiches zugesetzt.

Bevorzugt wird die Komplexkoazervation angewendet.

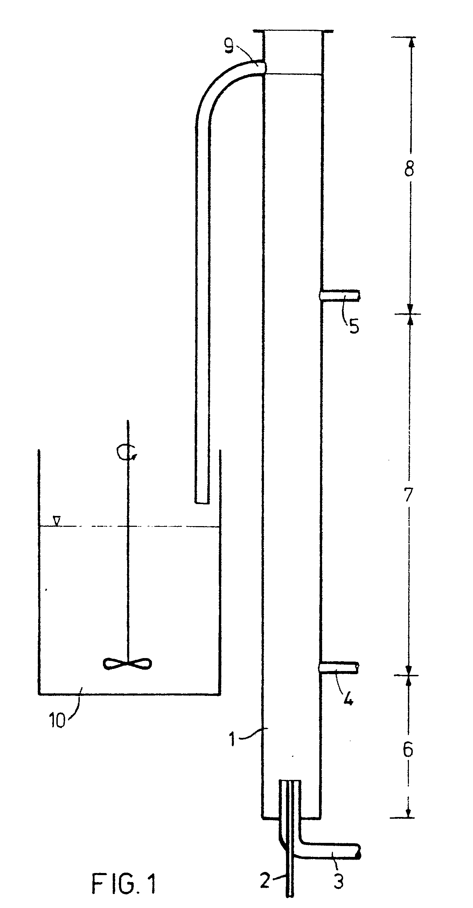

Die erfindungswesentlichen Verfahrensschritte-Erzeugung gleichgroßer Polymerisationsgemisch-Tröpfchen durch Eindüsen des Polymerisationsgemisches im Gleichstrom in die kontinuierlich zugeführte kontinuierliche Phase und Verkapselung der gleich großen Tröpfchenlassen sich in besonders einfacher Weise in einer Reaktionssäule, wie sie in Fig. 1 beschrieben ist, durchführen. Die in Fig. 1 beschriebene Anordnung wird vorzugsweise dann angewendet, wenn das zu verkapselnde Polymerisationsgemisch eine geringere oder gleiche Dichte aufweist wie die kontinuierliche Phase. In der Fig. 1 bezeichnet Abschnitt 6 den Verdüsungsbereich der Reaktionssäule 1, d. h. den Bereich in dem der Strahlzerfall des durch Düse 2 eingedüsten Polymerisationsgemisches erfolgt und die beim Strahlzerfall gebildeten Tröpfchen ihre endgültige Kugelgestalt annehmen. Aus Zuleitung 3 strömt die Lösung (kontinuierliche Phase), die die gleichgroßen Tröpfchen stabilisiert. Im unteren Teil des Abschnittes 7 wird durch die Zuleitung 4 die Komponente kontinuierlich zudosiert, die die Verkapselung auslöst. Durch die Zuleitung 5 können verfestigende Komponenten zugeführt werden. In Abschnitt 8 kann eine Härtung stattfinden. Die einzelnen Abschnitte 6, 7 und 8 der Reaktionssäule 1 sind unabhängig voneinander temperierbar und mit Kontrollinstrumenten wie Thermometern und pH-Meßgeräten versehen. Aus Fig. 1 ist ersichtlich, daß sich die verkapselten Polymerisationsgemisch-Tröpfchen unbeeinträchtigt von Scherkräften ausbilden können. Am Überlauf 9 der Reaktionssäule 1 liegen verkapselte Polymerisationsgemisch-Tröpfchen vor, deren Integrität auch bei der nachfolgenden Einwirkung mechanischer Kräfte, z. B. beim Rühren im Polymerisationsgefäß 10 nicht mehr verletzt wird.

Für die Verkapselung von Polymerisationsgemischen, die eine höhere Dichte aufweisen als die kontinuierliche Phase, eignet sich eine prinzipiell gleich angelegte Reaktionssäule 1 wie sie in Fig. 1 beschrieben ist, nur daß sich in diesem Fall bei der Säule Abschnitt 6, der Einlaß für das Polymerisationsgemisch 2 und die kontinuierliche Phase 3 am oberen Ende des Rohres und Abschnitt 8 und Auslaß 9 am unteren Ende der Reaktionssäule befinden.

Die Polymerisation des verkapselten Polymerisationsgemisches.

Die Polymerisationsgemisch-Tröpfchen finden sich nach der Verkapselung in einem Zustand, der ein Handhaben, z. B. ein Rühren unter Erwärmen erlaubt, ohne daß die Integrität der gekapselten Tröpfchen verletzt wird.

Hierin liegt ein wesentlicher Unterschied zu den herkömmlichen Suspensions-Polymerisationen, bei denen die Tröpfchen bis zum Erreichen eines bestimmten Polymerisationsgrades infolge Zerteilens und Zusammenfließens als diskrete Individuen nicht beständig sind. Die verkapselten Monomertröpfchen bewahren dagegen ihre Integrität und damit auch ihre einheitliche Größe.

Die Polymerisation des in den verkapselten Tröpfchen befindlichen Polymerisationsgemisches wird durch mehrstündiges Erwärmen der gegebenenfalls gehärteten Kapseln in wäßriger Suspension auf Temperaturen von 40 bis 95 °C bewirkt. Die Polymerisation der verkapselten Polymerisationsgemisch-Tröpfchen kann in den selben Behältern durchgeführt werden wie sie bei der üblichen Suspensions-Polymerisation verwendet werden.

Das Entfernen der Kapselwand

Nach dem Polymerisationsvorgang liegt ein festes, formstabiles Perlpolymerisat vor. Von diesem kann die Kapselwand in einem gesonderten Verfahrensschritt entfernt werden. Die Kapselwand kann aber auch — wenn das Perlpolymerisat auf Ionenaustauscher weiterverarbeitet werden soll — beim Einführen der funktionellen Gruppen entfernt werden.

a) Das Entfernen der Kapselwand in gesondertem Verfahrensschritt

Zum Entfernen der Kapselwand wird das verkapselte Perlpolymerisat einer chemischen Behandlung unterworfen, durch die die Kapselwand zerstört wird. Die Art der chemischen Behandlung richtet sich nach dem chemischen Aufbau der Kapselwand. Zum Beispiel werden Kapselwände aus Gelatine bzw. gehärteter Gelatine durch mehrstündiges Erwärmen der verkapselten Perlpolymerisate mit verdünnten wäßrigen Säuren, wie verdünnter Schwefelsäure, oder wäßrigen Basen, z. B. verdünnter Natronlauge, entfernt. Ein gleichartiger oder ähnlicher hydrolytischer Abbau wird auch bei der Zerstörung von Kapselwänden aus Polyamiden, wie aus Hexamethylendiamin und Adipinsäure, Polyestern, wie aus Terephthaloylchlorid und Bisphenol A, und Polyharnstoffen, wie aus Toluol-2,4-diisocyanat und Hexamethylendiamin angewendet.

b) Entfernen der Kapselwand beim Einführen funktioneller Gruppen

Das Einführen funktioneller Gruppen in Polymere erfolgt in den meisten Fällen unter drastischen Bedingungen. So wird zur Einführung von Sulfonsäuregruppen in vernetztes Polystyrol das Perlpolymerisat mit heißer konzentrierter Schwefelsäure behandelt. Bei der alkalischen Verseifung vernetzter Polyacrylsäureester werden die Perlpolymerisate mit 40 %iger Natronlauge mehrere Studen erhitzt. Unter diesen Bedingungen wird gleichzeitig auch die Kapselwand zerstört, und das Entfernen der Kapselwand kann in einem Arbeitsschritt mit der Einführung der funktionellen Gruppen durchgeführt werden. Das Einführen der funktionellen Gruppen wird durch die Kapselwand in keiner Weise beeinträchtigt.

Einführen funktioneller Gruppen.

Das Einführen funktioneller Gruppen in die erfindungsgemäß hergestellten Polymerisatperlen einheitlicher Teilchengröße erfolgt nach bekannten Verfahren. Eine Übersicht über diese Verfahren findet sich z. B. in Ullmanns Enzyklopädie der Technischen Chemie, 4. Auflage, Band 13, Seiten 300 bis 303.

Die nach dem erfindungsgemäßen Verfahren hergestellten Perlpolymerisate einheitlicher Teilchengröße können als solche, z. B. als sogenannte Adsorberharze oder inerte Trennschichtmaterialien für Trennschichten in Mischbettfiltern verwendet werden oder aber sie dienen, wie vorstehend bereits aufgezeigt, als Matrizes für die Herstellung von Ionenaustauschern.

Bei den in den folgenden Beispielen verwendeten Teilen handelt es sich um Gewichtsteile, sofern nichts anderes angegeben ist.

Beispiel 1

In der in Fig. 1 beschriebenen Apparatur wird durch die Kapillare 2 (Innendurchmesser : 0,35 mm ; Kapillarenmaterial : Edelstahl) eine 45 °C warme Lösung von 86 Teilen Styrol, 8 Teilen Divinylbenzol, 5 Teilen Ethylstyrol und 1 Teil Dibenzoylperoxid mit einer Geschwindigkeit von 2,7 ml/min eingedüst. Als kontinuierliche Phase dient eine auf 55 °C erwärmte wäßrige 10 %ige Gelatinelösung (Schweinshaut-Gelatine). Diese kontinuierliche Phase weist einen pH-Wert von 7, 8 auf und wird mit einer Geschwindigkeit von 12 ml/min durch 3 zugeführt. Der Verdüsungsbereich 6 wird auf einer Temperatur von 50 °C gehalten. Durch die Zuleitung 4 wird eine wäßrige 20 %ige Natriumsulfatlösung mit einer Geschwindigkeit von 4,7 ml/min zudosiert.

Im Verkapselungsbereich 7 wird die Temperatur der kontinuierlichen Phase so geregelt, daß sie von 50 °C (am unteren Ende) auf 15 °C (am oberen Ende) abfällt. Durch 5 wird eine wäßrige 5 %ige Natriumsulfatlösung einer Temperatur von 15 °C mit einer Geschwindigkeit von 100 ml/min zugeführt.

Die bei 9 ausfließende Kapselsuspension wird in einen Rührwerksbehälter 10 überführt und dort 2 Stunden gerührt und anschließend mit Wasser einer Temperatur von 15 °C gewaschen. Dann wird die Suspension mit 10 ml Formalin (36 %ig) und 10 g Dinatriumhydrogenphosphat-dodekahydrat je Liter wäßriger Phase unter Rühren versetzt. Im Verlauf von 2 Stunden wird die Suspension auf 25 °C erwärmt.

Anschließend werden die Kapseln durch Waschen mit Wasser von überschüssigem Formalin befreit. Dann wird das Polymerisationsgemisch in den Kapseln durch 10-stündiges Erwärmen der in Wasser suspendierten gehärteten Kapseln auf 70 °C unter Rühren polymerisiert. Das auf diese Weise erhaltene verkapselte Perlpolymerisat aus gelförmigem, mit Divinylbenzol vernetztem Polystyrol, wird nach Abtrennen, Waschen und Trocknen, ohne vorheriges Entfernen der Kapselwand, durch Sulfonieren in bekannter Weise (s. Ullmann *loc. cit.* S. 303) in einen stark sauren Kationenaustauscher überführt.

Die Korngröße des so erhaltenen stark sauren Kationenaustauschers (Na+-Form) liegt im Bereich 0,8-1,2 mm ; 80 % der Perlen weisen dabei eine Korngröße im Bereich 0,9-1,1 mm auf.

Die übliche Perlpolymerisation des gleichen Polymerisationsgemisches in einer 0,2 %igen wäßrigen Methylcellulose-Flotte mit nachfolgender Sulfonierung liefert dagegen einen Kationenaustauscher, bei dem nur 53 % der Perlen eine Korngröße von 0,8-1,2 mm und nur 29 % der Perlen eine Korngröße von 0,9-1,1 mm aufweisen.

Beispiel 2

In der Fig. 1 beschriebenen Apparatur wird durch die Kapillare 2 (Innendurchmesser : 0,4 mm ; Kapillarenmaterial : Edelstahl) eine 40 °C warme Lösung von 91 Teilen Styrol, 5 Teilen Divinylbenzol, 3 Teilen Ethylstyrol, einem Teil Azoisobutyronitril und 60 Teilen Isododecan mit einer Geschwindigkeit von 4,8 ml/min eingedüst.

Als kontinuierliche Phase dient eine auf 45 °C erwärmte wäßrige Lösung, die 1 Gew.-% Gelatine (Schweinshaut-Gelatine) und 1 Gew.-% Gummiarabicum enthält. Die kontinuierliche Phase weist einen pH-Wert von 5,7 auf und wird mit einer Geschwindigkeit von 15,3 ml/min durch 3 zugeführt. Der Verdüsungsbereich 6 wird auf einer Temperatur von 45 °C gehalten. Durch die Zuleitung 4 wird 0,1 normale Salzsäure in dem Maße zugeführt wie dies erforderlich ist, um den pH-Wert der kontinuierlichen Phase auf 4,0 (+/− 0,1) zu erniedrigen.

Im Verkapselungsbereich 7 wird die Temperatur der kontinuierlichen Phase so geregelt, daß sie von 45 °C (am unteren Ende) auf 15 °C (am oberen Ende) abfällt. Durch 5 wird ein Eiswasserstrom mit einer Geschwindigkeit von 20 ml/min zugeführt.

Die bei 9 austretende Kapselsuspension wird in einen Rührwerksbehälter 10 überführt, wo sie 3 Stunden bei 0 °C gerührt wird. Dann wird die Suspension mit 30 ml Formalinlösung (36 %ig) je 1 wäßriger Phase, 5 %iger Natronlauge bis zur alkalischen Reaktion und 20 g Dinatriumhydrogenphosphat-dodekahydrat je 1 wäßriger Phase versetzt. Anschließend wird die Kapselsuspension 4 Stunden bei 25 °C gerührt.

Dann werden die gehärteten Kapseln mit Wasser gewaschen und zur Polymerisation 10 Stunden bei 70 °C in wäßriger Suspension gerührt. Nach dem Abtrennen von der wäßrigen Phase wird das verkapselte Perlpolymerisat gewaschen und getrocknet.

Das auf diese Weise erhaltene verkapselte Perlpolymerisat aus makroporösem, mit Divinylbenzol vernetztem Polystyrol, wird anschließend, ohne vorheriges Entfernen der Kapselwand, nach dem in der US-PS 3,989,650 beschriebenen Verfahren durch Amidomethylierung mit Essigsäurephthalimidomethylester, alkalische Verseifung und Quaternierung mit Chlormethan in einen stark basischen Anionenaustauscher überführt.

Die Korngröße des so erhaltenen stark basischen Anionenaustauschers (Cl⁻-Form) liegt im Bereich 0,8-1,3 mm ; 91 % der Perlen weisen eine Korngröße im Bereich 0,9-1,2 mm auf.

Die übliche Polymerisation des gleichen Polymerisationsgemisches in einer 0,2 %igen wäßrigen Methylcellulose-Flotte mit nachfolgender Amidomethylierung und Quaternierung liefert dagegen einen Anionenaustauscher, bei dem nur 54 % der Perlen eine Korngröße von 0,8-1,3 mm und nur 31 % der Perlen eine Korngröße von 0,9-1,2 mm aufweisen.

Beispiel 3

In der in Fig. 1 beschriebenen Apparatur wird durch die Kapillare 2 (Innendurchmesser: 0,35 mm ; Kapillarenmaterial : Edelstahl) eine auf 5 °C abgekühlte Lösung, die aus einem Teil Azoisobutyronitril, 1,5 Teilen Sebacoylchlorid und einer mit Calciumchlorid entwässerten Mischung aus 86 Teilen Styrol, 8 Teilen Divinylbenzol und 5 Teilen Ethylstyrol frisch hergestellt worden war, mit einer Geschwindigkeit von 2,4 ml/min eingedüst. Als kontinuierliche Phase dient eine auf 5 °C gekühlte, 0,5 %ige wäßrige Polyvinylalkohollösung. Diese kontinuierliche Phase wird mit einer Geschwindigkeit von 7,4 ml/min durch 3 zugeführt. Der Verdüsungsbereich 6 wird auf einer Temperatur von 5 °C gehalten. Durch die Zuleitung 4 wird eine wäßrige Lösung, enthaltend 12 Gew.-% Soda und 8 Gew.-% Hexamethylendiamin, mit einer Geschwindigkeit von 2,2 ml/min in die Säule eindosiert. Der Verkapselungsbereich 7 wird dabei auf einer Temperatur von 25 °C gehalten.

Die bei 9 ausfließende Kapselsuspension wird in einen Rührwerksbehälter überführt und dort mit Wasser bei Raumtemperatur gewaschen.

Anschließend wird das in den Kapseln befindliche Polymerisationsgemisch durch 10-stündiges Rühren der wäßrigen Kapselsuspension bei 70 °C polymerisiert.

Das auf diese Weise erhaltene verkapselte Perlpolymerisat aus gelförmigem, mit Divinylbenzol vernetztem Polystyrol, wird anschließend zum Entfernen der Kapselwand mit 50 %iger Schwefelsäure bei 120 °C behandelt. Nach dem Abtrennen von der wäßrigen Phase wird das Perlpolymerisat gewaschen und getrocknet.

Die Korngröße des so erhaltenen gelförmigen Polystyrolperlpolymerisates liegt im Bereich 0,5-0,9 mm ; 82 % der Perlen weisen dabei eine im Bereich 0,63-0,8 mm liegende Korngröße auf.

Die übliche Perlpolymerisation des gleichen Polymerisationsgemisches in einer 0,2 %igen wäßrigen Methylcellulose-Flotte liefert dagegen ein Perlpolymerisat, bei dem nur 74 % der Perlen eine Korngröße von 0,5-0,9 und nur 27 % der Perlen eine Korngröße von 0,63-0,8 mm aufweisen.

Beispiel 4

In der in Fig. 1 beschriebenen Apparatur wird durch die Kapillare 2 (Innendurchmesser: 0,35 mm ; Kapillarenmaterial : Edelstahl) bei Raumtemperatur eine Lösung von 86 Teilen Styrol, 8 Teilen Divinylbenzol, 5 Teilen Ethylstyrol, 1 Teil Azoisobutyronitril und 3 Teilen Hexamethylendiisocyanat mit einer Geschwindigkeit von 2,3 ml/min eingedüst. Als kontinuierliche Phase dient eine 0,5 %ige wäßrige Polyvinylalkohollössung einer Temperatur von 22 °C. Diese kontinuierliche Phase wird mit einer Geschwindigkeit von 8, 6 ml/min durch 3 zugeführt. Durch die Zuleitung 4 wird eine wäßrige Lösung, die 12 Gew.-% Soda und 8 Gew.-% Hexamethylendiamin enthält, mit einer Geschwindigkeit von 2,2 ml/min zugeführt. Sowohl der Verdüsungsbereich 6 als auch der Verkapselungsbereich 7 werden auf Raumtemperatur gehalten. Die bei 9 austretende Kapseldispersion wird in einen Rührwerksbehälter 10 überführt, wo sie mit Wasser bei Raumtemperatur gewaschen wird. Anschließend wird die wäßrige Suspension 10 Stunden bei 70 °C zur Polymerisation des in den Kapseln befindlichen Polymerisationsgemisches gerührt.

Das auf diese Weise erhaltene verkapselte gelförmige Perlpolymerisat aus mit Divinylbenzol vernetztem Polystyrol wird anschließend, ohne vorheriges Entfernen der Kapselwand, durch Sulfonieren in bekannter Weise in einen stark sauren Kationenaustauscher überführt.

Die Korngröße des so erhaltenen sauren Kationenaustauschers (Na$^+$-Form) liegt im Bereich 0,8-1,2 mm ; 81 % der Perlen weisen dabei eine Korngröße im Bereich 0,9-1,1 mm auf.

Die übliche Perlpolymerisation des gleichen Polymerisationsgemisches in 0,2 %iger wäßriger Methylcellulose-Flotte mit nachfolgender Sulfonierung liefert dagegen einen stark sauren Kationenaustauscher, bei dem nur 53 % der Perlen eine Korngröße von 0,8-1,2 mm und nur 29 % der Perlen eine Korngröße von 0,9-1,1 mm aufweisen.

Beispiel 5

In der in Fig. 1 beschriebenen Apparatur wird durch die Kapillare 2 (Innendurchmesser : 0,35 mm ; Kapillarenmaterial : Edelstahl) eine 40 °C warme Lösung von 86 Teilen Styrol, 8 Teilen Divinylbenzol, 5 Teilen Ethylstyrol und einem Teil Dibenzoylperoxid mit einer Geschwindigkeit von 2,4 ml/min eingedüst. Als kontinuierliche Phase dient eine wäßrige Lösung, die 1 Gew.-% Gelatine (Schweinshaut-Gelatine), 1 Gew.-% des in Beispiel 6 der US-PS 4,181,639 beschriebenen Gemisches aus einem Acrylamid/Maleinsäureanhydrid-Copolymerisat und dessen Hydrolyseprodukt und 0,05 Gew.-% gereinigte Natriumcarboxymethylcellulose (Viskosität nach Brooksfield 650-850 cP in 2 %iger Lösung bei 20 °C und 20 UpM) enthält. Diese kontinuierliche Phase weist eine Temperatur von 45 °C und einen pH-Wert von 5,3 auf und wird mit einer Geschwindigkeit von 5,1 ml/min durch 3 zudosiert. Der Verdüsungsbereich 6 wird auf einer Temperatur von 45 °C gehalten. Durch die Zuleitung 4 wird 0,1 normale Salzsäure in dem Maße zugeführt, wie dies erforderlich ist, um den pH-Wert der kontinuierlichen Phase auf 3,9 (+/- 0,1) zu senken.

Im Verkapselungsbereich 7 wird die Temperatur der kontinuierlichen Phase so geregelt, daß sie von 45 °C (am unteren Ende) auf 15 °C (am oberen Ende) abfällt. Der Bereich 8 wird mit Eiswasser gekühlt, so daß die bei 9 ausfließende Kapselsuspension mit einer Temperatur von 5 °C in den Rührwerksbehälter 10 übergeht. Außerdem werden der Reaktionssäule durch die Zuleitung 5 kontinuierlich 12 %ige Formalinlösung mit einer Geschwindigkeit von 7,5 ml je Liter bei 9 ablaufender Kapselsuspension und soviel 15 %ige Natronlauge zugeführt, daß der pH-Wert im Bereich 8 11,5 beträgt.

Wenn der Rührwerksbehälter 10 gefüllt ist, wird der Zulauf unterbrochen und die ausfließende Kapselsuspension in einen andern Rührwerksbehälter geleitet.

In dem gefüllten Rührwerkskessel 10 wird die wäßrige Phase abgelassen und durch eine Lösung von 10 g Dinatrium-hydrogenphosphat-Dodekahydrat/l Wasser ersetzt.

Anschließend wird die Polymerisation des in den Kapseln eingeschlossenen Polymerisationsgemisches durch 10-stündiges Röhren der wäßrigen Suspension bei 70 °C bewirkt.

Das auf diese Weise erhaltene verkapselte gelförmige Perlpolymerisat aus mit Divinylbenzol vernetztem Polystyrol wird anschließend von der wäßrigen Phase abgetrennt, gewaschen, getrocknet und anschließend, ohne vorheriges Entfernen der Kapselwand durch Sulfonieren in bekannter Weise in einem stark sauren Kationenaustauscher überführt.

Die Korngröße des so erhaltenen Kationenaustauschers (Na$^+$-Form) liegt im Bereich 0,8-1,2 mm ; 72 % der Perlen weisen dabei eine Korngröße im Bereich 0,9-1,1 mm auf.

Die übliche Perlpolymerisation des gleichen Polymerisationsgemisches in 0,2 %iger wäßriger Methylcellulose-Flotte mit nachfolgender Sulfonierung liefert dagegen einen Kationenaustauscher, bei dem nur 50 % der Perlen eine Korngröße von 0,8-1,2 mm und nur 28 % der Perlen eine Korngröße von 0,9-1,1 mm aufweisen.

**Ansprüche**

1. Verfahren zur Herstellung von Perlpolymerisaten einheitlicher Teilchengröße und einheitlicher Qualität, dadurch gekennzeichnet, daß man

a) aus dem zu polymerisierenden Monomer bzw. Polymerisationsgemisch durch Eindüsen in eine mit dem Monomer bzw. Polymerisationsgemisch im wesentlichen nicht mischbare, kontinuierlich zugeführte Flüssigkeit Tröpfchen einheitlicher Größe erzeugt ;

b) diese Tröpfchen einheitlicher Größe in besagter Flüssigkeit kontinuierlich nach an sich bekannten Verfahren der Mikroverkapselung entweder unmittelbar mit einer unter den anzuwendenden Polymerisationsbedingungen stabilen Hülle oder zunächst mit einer gegenüber Scherkräften stabilen Hülle verkapselt und diese gegenüber Scherkräften stabile Hülle in einem zweiten Teilschritt kontinuierlich oder diskontinuierlich zu einer unter den anzuwendenden Polymerisationsbedingungen stabilen Hülle härtet ;

c) die mit einer unter den anzuwendenden Polymerisationsbedingungen stabilen Hülle verkapselten Monomer- bzw. Polymerisationsgemisch-Tröpfchen anschließend polymerisiert, mit der Maßgabe.

α) daß man das Monomer bzw. das Polymerisationsgemisch im Gleichstrom zur kontinuierlich zugeführten kontinuierlichen Phase in diese eindüst ;

β) daß man die Erzeugung der Tröpfchen und deren Verkapselung in verschiedenen Bereichen des Reaktionsgefäßes vornimmt ;

γ) daß man die Verfahrensschritte a) und b) in der Weise ausführt, daß auf die Tröpfchen von ihrer Erzeugung bis zu ihrer Verkapselung keine die Integrität der Tröpfchen verändernden Kräfte einwirken.

2. Verfahren gemäß Anspruch 1, dadurch gekennzeichnet, daß man die Einwirkung von die Integrität der Tröpfchen verändernden Kräften dadurch vermeidet, daß man die Tröpfchen hydrodynamisch aus dem Verdüsungsbereich und durch den Verkapselungsbereich transportiert.

3. Verfahren gemäß Anspruch 1 und 2, dadurch gekennzeichnet, daß man zum hydrodynamischen Transport der Tröpfchen aus dem Verdüsungsbereich und durch den Verkapselungsbereich die durch den Dichteunterschied zwischen Tröpfchen und kontinuierlicher Phase verursachte Bewegung der Tröpfchen in der kontinuierlichen Phase und die Fließbewegung der kontinuierlichen Phase ausnutzt.

4. Verfahren gemäß Ansprüchen 1 bis 3, dadurch gekennzeichnet, daß man bei der Verwendung lipophiler Monomere bzw. Polymerisationsgemische als kontinuierliche Phase Wasser oder wäßrige Lösungen verwendet.

5. Verfahren gemäß Ansprüchen 1 bis 4, dadurch gekennzeichnet, daß man als kontinuierliche Phase wäßrige Lösungen hydrophiler Kolloide verwendet.

6. Verfahren gemäß Ansprüchen 1 bis 5, dadurch gekennzeichnet, daß man die Verkapselung der Tröpfchen einheitlicher Größe durch Koazervation, Komplexkoazervation oder durch Phasengrenzflächenreaktion vornimmt.

7. Verfahren gemäß Ansprüchen 1 bis 6, dadurch gekennzeichnet, daß man bei der Verkapselung der Tröpfchen einheitlicher Größe durch Koazervation oder Komplexkoazervation als kontinuierliche Phase wäßrige Gelatine- oder Agar-Agar-Lösungen verwendet.

8. Verfahren gemäß Ansprüchen 1 bis 7, dadurch gekennzeichnet, daß als Komplexkoazervationskomponenten Gelatine und Gummi arabicum oder Gelatine und Copolymerisat-Gemische aus einem Copolymerisat mit statistisch verteilten Resten von Acrylamid und Maleinsäure oder Maleinsäureanhydrid und einem Copolymerisat mit statistisch verteilten Resten von Acrylamid, Acrylsäure und Maleinsäure, verwendet werden.

9. Verfahren gemäß Ansprüchen 1 bis 8, dadurch gekennzeichnet, daß man als Monomere Monovinyl- und/oder Polyvinylverbindungen verwendet.

10. Verfahren gemäß Ansprüchen 1 bis 9, dadurch gekennzeichnet, daß man als Monomere Styrol, α-Methylstyrol, Ethylstyrol, Chlorstyrol, Ester oder Amide der (Meth)-Acrylsäure oder Acrylnitril, Divinylbenzol, Divinyltoluol, Trivinylbenzol, Diethylenglykoldivinylether, Trivinylcyclohexan, Octadien-1,7, Heptadien-1,6, Hexadien-1,5 und/oder Methacrylsäureester mehrwertiger Alkohole verwendet.


## Claims

1. Process for the preparation of bead polymers of uniform particle size and uniform quality, characterised in that

a) droplets of uniform size are produced from the monomer or polymerisation mixture to be polymerised by spraying these materials into a liquid which is continuously fed in and is essentially immiscible with the monomer or polymerisation mixture ;

b) these droplets of uniform size are continuously encapsulated in the said liquid, according to processes of microencapsulation which are in themselves known, either directly with a shell which is stable under the polymerisation conditions to be used or first of all with a shell which is stable towards shearing forces and in a second step this shell which is stable towards shearing forces is hardened continuously or discontinuously to form a shell which is stable under the polymerisation conditions to be used ;

c) the monomer droplets or droplets of polymerisation mixture which have been encapsulated with a shell which is stable under the polymerisation conditions to be used are then polymerised,
with the proviso

α) that the monomer or the polymerisation mixture is sprayed into the continuously fed-in continuous phase co-currently with this phase ;

β) that the production of the droplets and the encapsulation thereof are undertaken in different regions of the reaction vessel ; and

γ) that the process steps a) and b) are carried out in such a manner that no forces which alter the integrity of the droplets act on the droplets from their production to their encapsulation.

2) Process according to Claim 1, characterised in that the action of the forces which alter the integrity of the droplets is avoided by hydrodynamically transporting the droplets out of the spraying region and through the encapsulation region.

3) Process according to Claim 1 and 2, characterised in that the movement of the droplets in the continuous phase, which movement is caused by the density difference between droplets and continuous phase, and the flowing movement of the continuous phase are utilised for the hydrodynamic transport of the droplets out of the spraying region and through the encapsulation region.

4) Process according to Claims 1 to 3, characterised in that water or aqueous solutions are used as the continuous phase when using lipophilic monomers or polymerisation mixtures.

5) Process according to Claims 1 to 4, characterised in that aqueous solutions of hydrophilic colloids are used as the continuous phase.

6) Process according to Claims 1 to 5, characterised in that the encapsulation of the droplets of uniform size is carried out by means of coacervation, complex coacervation or by a phase interface reaction.

7) Process according to Claims 1 to 6, characterised in that aqueous gelatine solutions or agar-agar solutions are used as the continuous phase in the encapsulation of the droplets of uniform size by means of coacervation or complex coacervation.

8) Process according to Claims 1 to 7, characterised in that gelatine and gum arabic, or gelatine and copolymer mixtures composed of a copolymer with statistically distributed residues of acrylamide and maleic acid or maleic acid anhydride and a copolymer with statistically distributed residues of acrylamide, acrylic acid and maleic acid, are used as the complex coacervation components.

9) Process according to Claims 1 to 8, characterised in that monovinyl compounds and/or polyvinyl compounds are used as monomers.

10) Process according to Claims 1 to 9, characterised in that styrene, α-methylstyrene, ethylstyrene, chlorostyrene, esters or amides of (meth)acrylic acid or acrylonitrile, divinylbenzene, divinyltoluene, trivinylbenzene, diethylene glycol divinyl ether, trivinylcyclohexane, 1,7-octadiene, 1,6-heptadiene, 1,5-hexadiene and/or methacrylic acid esters of polyhydric alcohols are used as monomers.


## Revendications

1. Procédé de préparation de polymères en perles à dimension de particule uniforme et de qualité uniforme, caractérisé en ce que :

a) à partir du monomère à polymériser ou du mélange de polymérisation, par injection d'un liquide essentiellement non miscible avec le monomère ou le mélange de polymérisation, amené en continu, on forme des gouttelettes de dimension uniforme ;

b) on encapsule ces gouttelettes de dimension uniforme dans ledit liquide en continu par des procédés connus en soi de la micro-encapsulation soit directement par une enveloppe stable dans les conditions de polymérisation à observer, soit, d'abord, par une enveloppe stable à l'égard de forces de cisaillement, et on durcit cette enveloppe stable à l'égard des forces de cisaillement dans un deuxième stade partiel, en continu ou en discontinu, en une enveloppe stable dans les conditions de polymérisation à observer ;

c) on polymérise ensuite les gouttelettes de monomères ou de mélange de polymérisation encapsulés par une enveloppe stable dans les conditions de polymérisation à observer, étant spécifié que

α) on injecte le monomère ou le mélange de polymérisation, en courant parallèle avec la phase continue amenée en continu, dans cette dernière ;

β) on forme les gouttelettes et on les encapsule dans des régions différentes du récipient de réaction ;

γ) on exécute les stades opératoires a) et b) de manière qu'il ne s'exerce sur les gouttelettes, depuis leur formation jusqu'à leur encapsulage, aucune force modifiant leur intégrité.

2. Procédé selon la revendication 1, caractérisé en ce que l'on évite l'action de forces modifiant l'intégrité des gouttelettes en transportant les gouttelettes par transport hydrodynamique hors de la région d'injection et au travers de la région d'encapsulage.

3. Procédé selon les renvendications 1 et 2, caractérisé en ce que, pour le transport hydrodynamique des gouttelettes hors de la région d'injection et au travers de la région d'encapsulage, on exploite le mouvement des gouttelettes provoqué par la différence de densité entre les gouttelettes et la phase continue dans la phase continue et le mouvement d'écoulement de la phase continue.

4. Procédé selon les revendications 1 à 3, caractérisé en ce que, lorsque l'on utilise des monomères ou des mélanges de polymérisation liphophiles, on utilise de l'eau ou des solutions aqueuses en tant que phase continue.

5. Procédé selon la revendication 4, caractérisé en ce que l'on utilise en tant que phase continue des solutions aqueuses de colloïdes hydrophiles.

6. Procédé selon les revendications 1 à 5, caractérisé en ce que l'on provoque l'encapsulage des gouttelettes de dimension uniforme par coacervation, coacervation complexe ou réaction à l'interface de phases.

7. Procédé selon les revendications 1 à 6, caractérisé en ce que, à l'encapsulage des gouttelettes de dimension uniforme par coacervation ou coacervation complexe, on utilise en tant que phase continue des solutions aqueuses de gélatine ou de gélose.

8. Procédé selon les revendications 1 à 7, caractérisé en ce que l'on utilise en tant que composants de coacervation complexe la gélatine et la gomme arabique ou la gélatine et des mélanges de copolymères consistant en un copolymère à restes en répartition statistique d'acrylamide et d'acide maléique ou d'anhydride maléique et un copolymère à restes en répartition statistique d'acrylamide, d'acide acrylique ou d'acide maléique.

9. Procédé selon les revendications 1 à 8, caractérisé en ce que l'on utilise en tant que monomères des composés monovinyliques et/ou des composés polyvinyliques.

10. Procédé selon les revendications 1 à 9, caractérisé en ce que l'on utilise en tant que monomères le styrène, l'α-méthylstyrène, l'éthylstyrène, le chlorostyrène, des esters ou amides de l'acide acrylique ou méthacrylique ou l'acrylonitrile, le divinylbenzène, le divinyltoluène, le trivinylbenzène, l'éther divinylique du diéthylèneglycol, le trivinylcyclohexane, l'octadiène-1,7, l'heptadiène-1,6, l'hexadiène-1,5 et/ou des esters méthacryliques d'alcools polyvalents.

FIG. 1